# EUROPEAN PATENT APPLICATION

(11) **EP 1 126 273 A1**
(43) Date of publication of application: **22.08.2001**
(21) Application number: 00660021.7
(22) Date of filing: 09.02.2000
(51) Int. Cl.: G01N 21/88

(54) **Method and arrangement for inspecting a transparent object for flaws**

(71) Applicant: Orbis Oy, 00421 Helsinki (FI)
(72) Inventor: Zhan, Xiaowei, 02150 Espoo (FI)
(74) Representative: Levlin, Jan Markus

(57) **Abstract**

A method (800) for inspecting a transparent part of an object (10) for flaws comprises the step of illuminating (83) a transparent part of an object from one side of the object with light emitted from a light source (51). The method is characterized in that the light source is substantially a point source, and the method further comprises the steps of intercepting (84) the light transmitted through the object with a diffuse projection screen (52) and capturing (85) an image of the transparent part of the object by capturing light intercepted with the diffuse projection screen. An apparatus (500,600) for inspecting a transparent part of an object for flaws comprises a light source (51), which is substantially a point source, a diffuse projection screen (52) for intercepting light emitted from the light source and transmitted through an object under study, and electronic image capturing means (53), which is arranged to capture an image on the diffuse projection screen.

## Description

The invention relates in general to inspection of transparent objects. In particular the invention relates to inspecting transparent objects for flaws using optical methods.

Quality control is often one step in a mass production of various objects. A quality control process should be fast and reliably detect the possible defects. A transparent window covering the LCD (liquid crystal display) screen of a mobile phone is an example of a transparent flat object that is typically produced in large quantities and needs to have good visual qualities.

There can be various flaws which can be detected visually in a transparent object having substantially even surfaces. Its surfaces may be damaged or contaminated so that there are, for example, scratches or dust particles on the surfaces. If the studied object is formed by assembling various parts together, there may be some dust in the interface of two parts. The transparent material itself, for example glass or plastic, may contain undesired particles, or during the manufacture of the object, for example during moulding, air bubbles or other flaws can be generated to the object. To be able to inspect an object for flaws that are visually detectable, the object has to be illuminated in a proper way. Scratches on a reflecting surface, for example, can be detected most efficiently using a different technique than the one used for detecting particles within the material.

In mass production it is advantageous to control the visual quality of manufactured objects using machine vision. In machine vision a digital camera, or other electronic image capturing means, captures the image of the studied object and the digital image is then processed using suitable flaw detection algorithms. In machine vision applications a proper illumination is crucial, because the detection of defects depends on the quality of the image that is taken of the object.

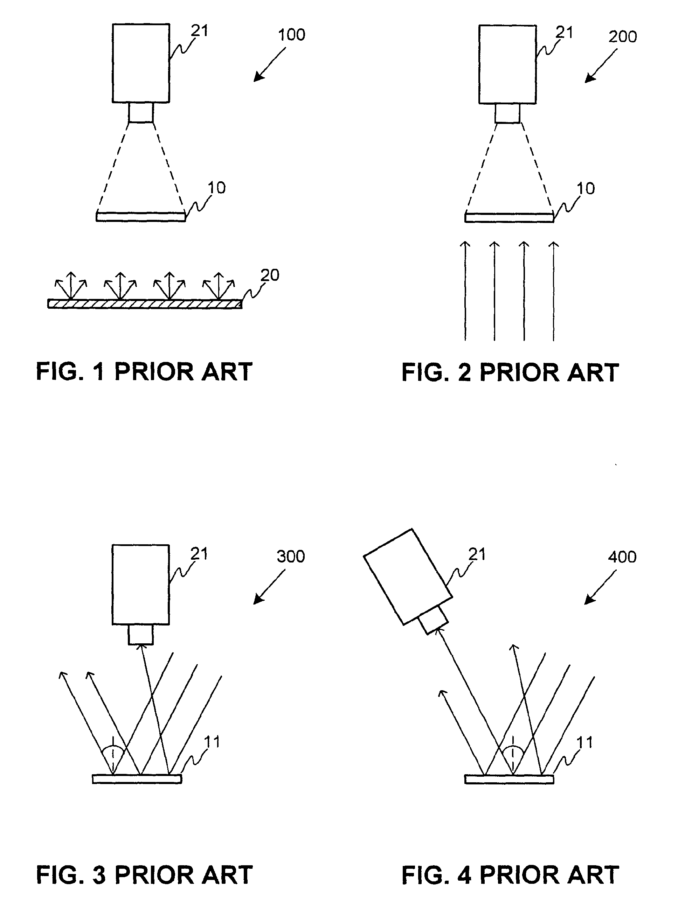

Figure 1 presents a schematic drawing of a detection system 100 typically used in detecting flaws in transparent, relatively small plate-like objects. The studied transparent object 10 is placed in between a diffuse illumination source 20 and a digital camera 21. From a diffuse light source, light is emitted to all directions. The area of the diffuse illumination source 20 is typically at least so large that the digital camera 21 sees the whole studied object 10 against a bright background. The distance between the digital camera and the studied object is typically determined by the focal length of the optical system in the camera.

An example of a diffuse illumination source is a light bulb inserted to a cavity, whose inside walls are reflecting. One side of the cavity is translucent diffuse material. If the heat emitted by the bulb is a problem, it is possible to use an optical fiber bundle to transmit the light from a light bulb to another location. The light exiting the optical fiber is then directed to translucent diffuse material.

When the area of the studied object is some square centimeters and the whole studied object is inspected typically one or two steps, it is possible to detect, for example, dot-like defects in the studied object using the detection system 100. Because light from the diffuse illumination source is emitted in all directions, the contrast achieved with the detection system 100 is typically not good enough for detecting, for example, dust particles or other point-like impurities. Scratches are usually not detected either using the detection system 100 because of the low contrast.

Figure 2 presents a schematic drawing of a second detection system 200 used in detecting flaws in relatively small transparent plate-like objects. In the second detection system 200 the studied object 10 is illuminated with collimated light. A digital camera 21 then captures an image of the illuminated object.

Using the second detection system 200 it is, in principle, possible to detect, for example, scratches, air bubbles and particles in the studied object. If the back and front surfaces of the object (in the view point of the camera) are even, then the light incident on the back surface of the object substantially normal to the surface exits the front surface at the same angle. If there is a scratch, the light hitting the scratch is deflected.

Figure 3 presents a schematic drawing of a known dark-field illumination apparatus 300 for inspecting reflecting surfaces. Collimated light is incident to the studied surface 11 in a certain angle, and from a clean undamaged surface the light is reflected at an angle of reflection, which is equal to the angle of incidence. The camera 21 in the apparatus presented in Figure 3 placed so that mainly light deflected at other angles, due to defects, is captured with the camera. Defects at the surface 11 are detected as brighter areas at a darker background.

Figure 4 presents a schematic drawing of a known bright-field illumination apparatus 400 for inspecting reflecting surfaces. As in the dark-field illumination apparatus 300, collimated light is incident to the studied surface 11 in a certain angle in this bright-field illumination apparatus 400. The camera 21 is in a bright-field apparatus 400 placed so that it detects the light reflected from a clean undamaged surface. The camera is placed to the direction defined by the angle of reflection. Defects at the surface 11 are detected as darker areas at a brighter background.

A common problem for the apparati using collimated light, examples of which are presented in Figures 2-4, is that there may be difficulties in producing a collimated beam where the intensity of light is uniform across the beam. Especially in machine vision applications, the intensity of the incident light should preferably be even.

A further problem is that the surface inspection apparati and methods using reflection of light, examples of which are presented in Figures 3 and 4, cannot be successfully used to study the surfaces of transparent objects, because the intensity of the light reflected from an even surface of a transparent object is typically much smaller than the intensity of light reflected from, for example, an even metallic surface. There may additionally be a need to rotate the surface under study for detecting especially scratches, when light incident on the surface is not coming from the direction defined by the normal of the surface.

Furthermore, to detect the flaws of a plate-like transparent object, the opposite surfaces of the plate-like object should be usually investigated separately. Because the object is transparent, the inspection of the object should include the inspection of the bulk material, not only the inspection of surfaces. The flaws within the transparent material should be investigated with a separate method, if the surfaces are studied with a method using reflection of light.

The object of the invention is to present an illumination method and apparatus for inspecting transparent objects or transparent parts of objects for flaws. A further object is to present a method and apparatus that enables the detection of surface flaws and flaws within the material to be detected at a time, preferably so that the various types of defects are detected as darker areas in a brighter background. A further object is to present a method and apparatus using which it is possible to inspect an area of several square centimeters at a time and to detect point flaws. A further object of the invention is that the inspection apparatus is compact, easy to construct and suitable to form a part of a modular inspection system.

The objects of the invention are achieved by illuminating a transparent object or a transparent part of an object with a light emitted from a point source and by intercepting the light transmitted through the transparent object with a diffuse projection screen.

A method according to the invention is a method for inspecting a transparent part of an object for flaws, which method comprises the step of illuminating a transparent part of an object from one side of the object with light emitted from a light source, and it is characterized in that the light source is substantially a point source, and that the method further comprises the step of:
- intercepting the light transmitted through the object with a diffuse projection screen, and
- capturing an image of the transparent part of the object by capturing light intercepted with the diffuse projection screen.

In a method and apparatus according the invention, an object, at least parts of which are transparent, is illuminated with light emitted from a point source. The light transmitted through a transparent part of the object under study is intercepted with a diffuse projection screen. Because the light is emitted from a point source, a sharp image of the object is formed on the diffuse projection screen, when the properties of the diffuse screen are selected properly. A digital camera, for example, can be used to capture the image on the diffuse projection screen. The captured image can be then processed using, for example, suitable software.

The light incident on the object enters the transparent part of the object across a first surface, travels through the transparent material and then exits the object across a second surface. Various flaws at both the surfaces and in the transparent material itself can therefore be detected in the image formed on the diffuse projection screen. Term object, when referring to the object under study, refers in this specification and in the claims to an object, which is substantially plate-like, which may be, for example, slightly curved and whose thickness may vary from point to point. The shapes of the surfaces of a curved object may be independent of each other. Some examples of such objects are planar or curved windows covering display units in various devices or lenses having such a long focal length that their image is formed on the diffuse projection screen. It is possible that either the whole object under study or some part(s) of the object is (are) transparent.

Point defects, such as dust or impurity particles, on the surfaces or within the transparent material cause the incident light to scatter away from its original direction. They are thus detected as darker area within the generally brighter image of the transparent part of the object. Darker area refers here to a first area of the image on the projection screen, where the intensity of light is smaller than in a second area of the image. Because a point source is used, the image on the diffuse projection screen is sharp and the detection of small dark areas resulted by the point defects is possible. It is also possible to place the diffuse projection screen at different distances from the object and, when desired, to adjust the magnification of the object. Magnification may further facilitate the detection of point defects on the surfaces of the object or within the transparent material.

Scratches on the surface of the transparent part of the object deflect light away from its original direction. Therefore the scratches are also detectable as darker areas in the image on the diffuse projection screen. Air bubbles within the material cause light to be deflected from its original direction, at least partly because light deflects at the extra boundaries, which an air bubble creates, between air and transparent material.

The light scattered from point defects or deflected from scratches and/or air bubbles may cause some slightly brighter areas to the image on the diffuse projection screen. If detects are detected by searching darker areas within the image, the possibly brighter areas do not strongly disturb the detection of the defects. Furthermore, the light is typically scattered and is deflected into various directions because of the defects, so the bright areas do not have any clear boundaries, unlike the dark areas indicating defects.

In a method according to the invention, if the object under study is substantially planar and its normal is parallel to the optical axis defined by the point source and the image capturing means, there is no need to rotate a plate-like object along an axis which is parallel to its normal. If the studied object is slightly curved and has, typically, a concave surface and a convex surface, it is usually advantageous to place a concave surface towards the point source. If a convex surface is placed towards the point source, there can be problems, for example, with total reflection. To detect reliable defects in a curved object, the place of the object with respect to the optical axis of the system may depend on the form of the object.

An apparatus according to the invention is an apparatus for inspecting a transparent part of an object for flaws, which apparatus comprises
- a light source, and
- electronic image capturing means, and it is characterized in that it further comprises a diffuse projection screen for intercepting light emitted from the light source and transmitted through an object under study, and characterized further in that the light source is substantially a point source and the electronic image capturing means is arranged to capture an image on the diffuse projection screen.

The invention relates also to an inspection system, comprising at least two apparati for inspecting an object for flaws, which system is characterized in that a first apparatus for inspection a transparent part of an object for flaws comprises
- a light source, which is substantially a point source,
- a diffuse projection screen for intercepting light emitted from the light source and transmitted through an object under study, and
- electronic image capturing means arranged to capture an image on the diffuse projection screen.

One advantage of a method and apparatus according to the invention is that they allow the detection of both surface defects and defects within the transparent material at a time. There is necessarily no need to study, for example, the surface of the material separately.

A further advantage is that scratches and particles on the surface of the object as well as particles within the transparent material and, furthermore, air bubbles within the transparent material are all detected as darker areas in the image produced on the diffuse projection screen. The detection of the defects, for example using machine vision, is therefore more straightforward than detection of defects whereof some produce brighter and some produce darker areas to the image.

Further advantages of the invention are discussed in more detail in connection with the preferred embodiments.

The invention will now be described more in detail with reference to the preferred embodiments by the way of example and to the accompanying drawings where
- Figure 1: shows a known inspection system, which uses a diffuse light source, for detecting flaws in a transparent object,
- Figure 2: shows a known inspection system, which uses collimated light, for detecting flaws in a transparent object,
- Figure 3: shows a known dark-field flaw inspection system, which uses collimated light, for detecting surface flaws of a reflecting surface,
- Figure 4: shows a known bright-field flaw inspection system, which uses collimated light, for detecting surface flaws of a reflecting surface,
- Figure 5: shows a schematic drawing of an apparatus according to a first preferred embodiment of the invention,
- Figure 6: shows a drawing of an apparatus according to a second preferred embodiment of the invention,
- Figure 7: shows a flaw inspection system according to the invention, and
- Figure 8: shows a flowchart of a method according to the invention.

Figures 1-4 are discussed in detail in connection with the description of flaw inspection apparatus according to prior art.

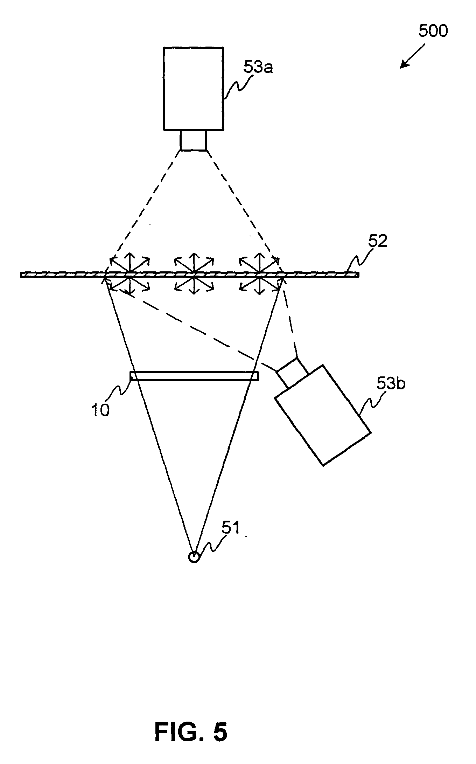

Figure 5 presents a schematic drawing of an apparatus 500 and method according to a first preferred embodiment of the invention. An object 10 under study, at least part of which is transparent, is placed between a point source 51 and a diffuse projection screen 52. The point source is arranged to illuminate practically uniformly the transparent area of the object. As can be seen in Figure 5, the image formed on the diffuse projection screen is somewhat larger than the object. The distance between the diffuse projection screen and the object can be adjusted to achieve a desired magnification.

The image of the transparent part of the studied object is captured typically with electronic image capturing means 53, for example with a digital camera. Two alternatives are presented in Figure 5: if the diffuse projection screen 52 is translucent, the electronic image capturing means 53a is typically placed on the opposite side of the projection screen than the object under study and the light source, so that the optical axis of the apparatus according to the invention is a straight line. If the projection screen is not translucent, the image capturing means 53b is placed on the same side of the diffuse projection screen as the object under study. In this case the optical axis of the system is not a straight line.

If the point source emits light to all directions, the light entering the diffuse projection screen may be limited by using, for example, a suitable aperture between the point source and the object. The point source can be, for example, a led emitting monochromatic light or a light source emitting light of various wavelengths.

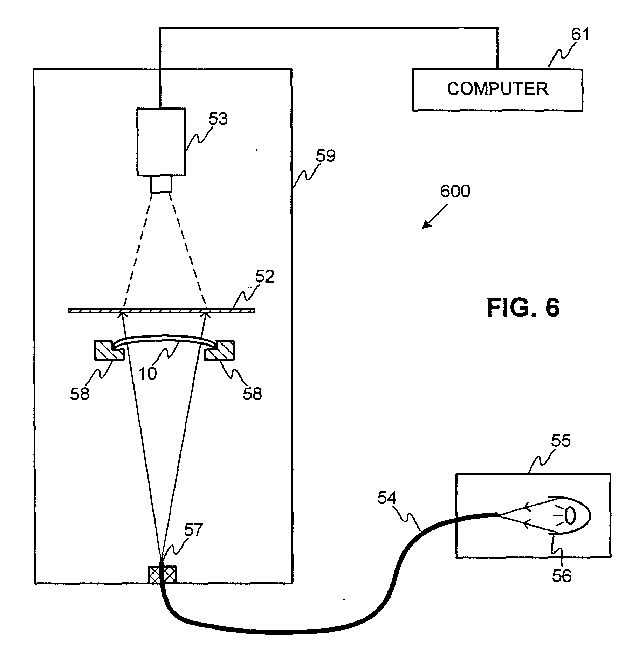

Figure 6 presents an apparatus 600 according to a second preferred embodiment of the invention. In this apparatus, an optical fiber 54 emitting light to a certain cone is used as the point source. The angle of the cone is defined, at least partly, by the material of the optical fiber. The actual light source may be, for example, a halogen lamp or a metal halide lamp in a separate housing 55. Light may be directed to the optical fiber using, for example, reflectors 56.

In apparatus 600, the distance between the light emitting end 57 of the optical fiber and the object under study is such that the inspected transparent part of the object 10 is illuminated. The minimum distance thus depends on the angle of the light cone. The area of the cross section of the optical fiber may also affect the distance. The light emitting end 57 of the optical fiber is placed so far from the object 10 that it seems to be a point source. The sharpness of the image on the diffuse projection screen can be used to select a long enough distance between the light emitting end of the optical fiber and the studied object. If the diameter of the cross section of the optical fiber is about 3 mm, a suitable distance may be about 30 cm. A 50 W halogen lamp, for example, may be used for providing light into the optical fiber.

The studied object 10 may be placed on a frame-like holder 58, which has an opening for allowing a transparent part of the object being illuminated. As Figure 6 illustrates, the object 10 may be curved, and the concave surface is preferably placed towards the light source. It is possible that the diffuse projection screen has a shape similar to that of the studied object, but if the studied object is only slightly curved, a planar diffuse projection screen may be used.

Light transmitted through the transparent part of the object forms an image on the diffuse projection screen 52. In the apparatus 600 according to the second preferred embodiment of the invention, the diffuse projection screen 52 is translucent and the electronic image capturing means 53 is placed on the opposite side of the translucent diffuse projection screen as the object under study. The material forming the translucent diffuse projection screen may be, for example, a thin sheet of a translucent, opaque material attached to a frame. The thickness and opaqueness of the sheet affect the sharpness and brightness of the image. A suitable choice of material and thickness can be found, for example, by trying various sheets and selecting the one producing the sharpest image. The material of a sheet forming the translucent diffuse projection screen is advantageously very homogenous: if a sheet of paper is used, for example, the fibers in the paper may cause undesired variations to intensity of light in the image. The distance between the studied object 10 and the translucent diffuse projection screen 52 is typically some centimeters in an apparatus 600.

In the apparatus 600 presented in Figure 6, the image on the translucent diffuse projection screen is captured using, for example, a digital camera 53. Advantageously the digital camera 53 is placed so that a line connecting the light source and the objective of a digital camera (in other words, the optical axis of the apparatus 600) is perpendicular to the translucent diffuse projection screen. The distance between the digital camera and the translucent diffuse projection screen is determined by the focal length of the optics in the camera. The camera may capture the whole image on the translucent diffuse projection screen at a time or, if a better resolution is required, it may capture the image, for example, in two parts. The holder 58 or the digital camera 53, for example, may be moved to obtain images of different parts of the object. The time required for the inspection of the object in an apparatus according to the invention is typically defined by the time it takes to capture the image on the diffuse projection screen.

The digital camera or other electronic image capturing means is typically connected to a computer 61 or to another computing device, where a suitable program detecting darker areas in the image and analyzing the areas is run.

The apparatus 600 according to the second preferred embodiment of the invention is assembled to a housing 59, and the inside walls of the housing are typically matte-black. This way any stray light, for example light reflected from the surface of the object near to the light source, is prevented from entering the diffuse projection screen.

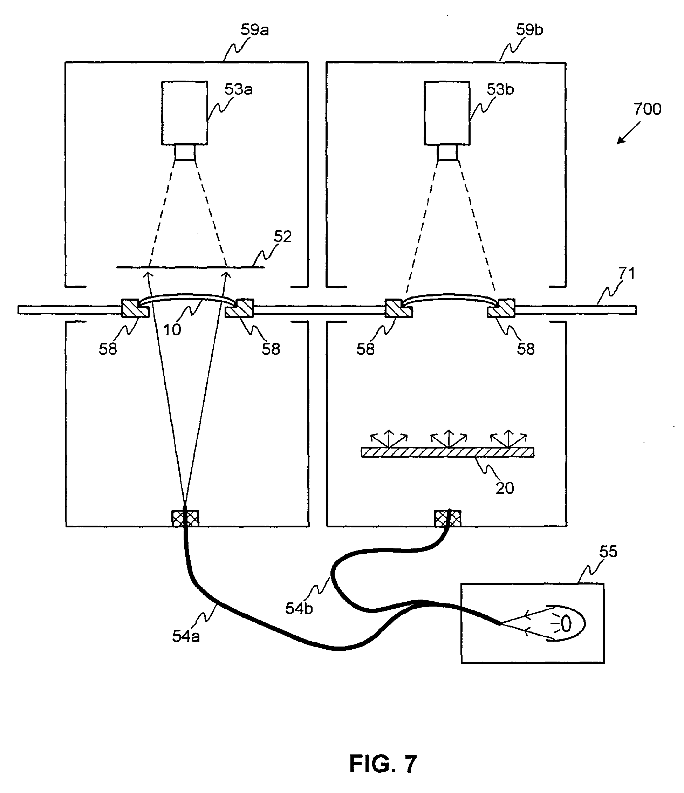

Figure 7 shows an inspection system 700 according to the invention, where a part of the inspection system is a flaw inspection apparatus according to the invention. The flaw inspection apparatus according to the invention may be, for example, a flaw inspection apparatus 600 according to the second preferred embodiment of the invention. If the object under study comprises, for example, transparent and non-transparent areas, then another part of the inspection system may be designed to inspect a non-transparent area of the object.

Consider, for example, an object moulded out of transparent plastic and having, for example, a sheet of plastic having non-transparent areas attached to the moulded object, the sheet typically covering one surface of the object. The inspection system 700 presented in Figure 7 comprises, for example, in a first housing 59a parts of an inspection apparatus according to the invention for studying a transparent area of the object and in a second housing 59b a second inspection apparatus for studying a non-transparent area of the object. The second apparatus may, for example, comprise a diffuse illumination source and a second digital camera 53b. The diffuse illumination source presented in Figure 7 is constructed by illuminating a diffuse plate 20 with light emitted from an optical fiber 54b. A bifurcated optical fiber 54a; 54b may be used to transmit light from a single halogen lamp, for example, to the first housing 59a and to the second housing 59b of the inspection system 700. It is also possible that an inspection system comprises more than two inspection apparati, and a branched optical fiber carries light to some or all these apparati.

Advantageously the holder 58 of the studied object is movable so that the object can be easily moved between the inspection points. The holder may be, for example, fixed to a bar 71, whose direction is perpendicular to the optical axis of the inspection apparati and along which the holder can be moved sideways from one inspection point to another. An object can be placed to the holder, for example just after manufacture of the object, and then the holder is moved to the inspection points, one after another. After the inspection, the object can be moved from the holder and further processed depending on the results of the inspections. It is further advantageous that there are many holders, or one single holder housing many objects at the same time, and the distance between the holders (or the distance of the objects in a holder) is adjusted to be the same as the distance between the inspection points. The holder may be, for example, a part of a separate robot or device which moves an object under study from one place to another. It is also possible that the objects under study are placed on a conveyor belt having proper holders and openings and running through an inspection apparatus according to the invention.

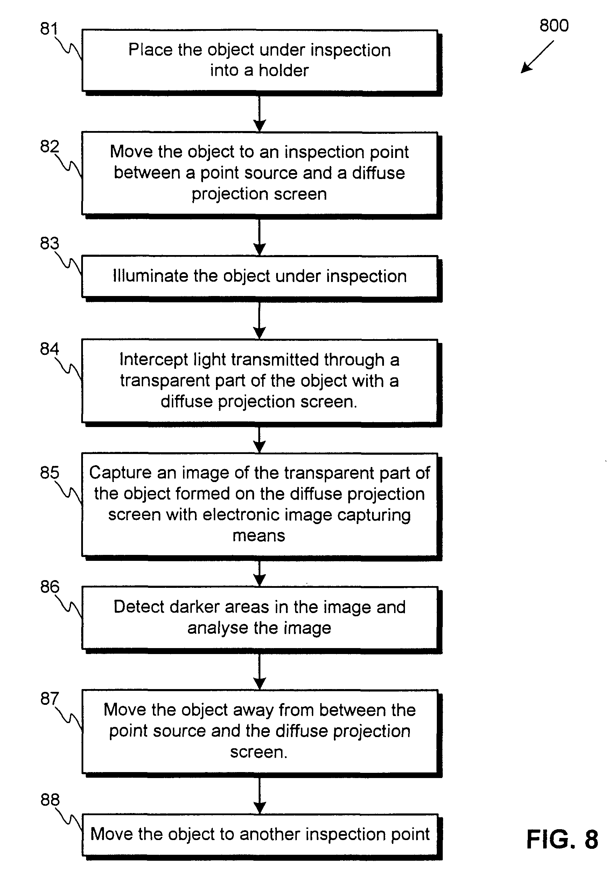

Figure 8 shows a flowchart of a method 800 according to the invention. In step 82 the object under inspection is moved to an inspection point between a point source and a diffuse projection screen. In the step 83 a transparent part of the object is illuminated, and in step 84 the light transmitted through the transparent part of the object is intercepted with a diffuse projection screen. The diffuse projection screen may be translucent. In step 85 an image of the object formed on the diffuse projection screen is captured using, for example, electronic image capturing means. In step 86 the captured image is analyzed using, for example, proper software. Darker areas in the image, for example, can be detected and analyzed. The object is moved away from the inspection point in step 87.

It is possible that the object is placed to a holder (step 81) before the inspection. If the holder has a proper opening, or it otherwise allows light to be transmitted through a transparent part of the object, the object in the holder can be illuminated in step 83. Further, the object in the holder can be moved away from the inspection point (step 87). It is also possible that the object is moved to another inspection apparatus in the same holder (step 88). A non-transparent part of the object, for example, can be inspected in the other inspection apparatus.

In view of the foregoing description it will be evident to a person skilled in the art that various modifications may be made within the scope of the invention. While a number of preferred embodiments of the invention have been described in detail, it should be apparent that many modifications and variations thereto are possible, all of which fall within the true spirit and scope of the invention.

## Claims

1. A method (800) for inspecting a transparent part of an object for flaws, which method comprises the step of illuminating (83) a transparent part of an object from one side of the object with light emitted from a light source, characterized in that the light source is substantially a point source, and that the method further comprises the steps of:
- intercepting (84) the light transmitted through the object with a diffuse projection screen, and
- capturing (85) an image of the transparent part of the object by capturing light intercepted with the diffuse projection screen.

2. A method according to claim 1, characterized in that the diffuse projection screen is substantially planar.

3. A method according to claim 2, characterized in that the image on the diffuse projection screen, which is translucent, is captured (85) using electronic image capturing means placed on the opposite side of the translucent diffuse projection screen as the object, and in that the normal of the translucent diffuse projection screen is substantially parallel to the direction defined by the light source and the electronic image capturing means.

4. A method according to claim 3, **characterized** in that it further comprises the step of detecting (86) a first area of the image having smaller intensity of light than the intensity of light in a second area of the image.

5. A method according to claim 1, characterized in that it further comprises the steps of:
- placing (81) the object to a holder having an opening of at least the size of a studied transparent area of the object,
- moving (82) the object between the light source and the diffuse projection screen, and
- after capturing the image of the transparent part of object, moving (87) the object away from between the light source and the diffuse projection screen.

6. A method according to claim 5, **characterized** in that it further comprises the step of moving (88) the object into another inspection apparatus comprising another light source and another image capturing means for inspecting a non-transparent part of the object.

7. An apparatus (500, 600) for inspecting a transparent part of an object for flaws, which apparatus comprises
- a light source (51), and
- electronic image capturing means (53), characterized in that it further comprises a diffuse projection screen (52) for intercepting light emitted from the light source and transmitted through an object under study, and in that the light source is substantially a point source and the electronic image capturing means is arranged to capture an image on the diffuse projection screen.

8. An apparatus according to claim 7, characterized in that the diffuse projection screen (52) is substantially planar.

9. An apparatus according to claim 7, characterized in that the diffuse projection screen (52) is translucent and the electronic image capturing means (53) is arranged to capture light transmitted through the translucent diffuse projection screen.

10. An apparatus according to claim 9, characterized in that the normal of the translucent diffuse projection screen (52) is substantially parallel with the direction defined by the electronic image capturing means (53) and the light source (51).

11. An apparatus according to claim 7, **characterized** in that it further comprises means (58) for holding the object and having an opening at least the size of the studied transparent part of the object.

12. An apparatus according to claim 11, characterized in that the means (58) for holding the object is arranged to be movable to a certain position between the light source and the translucent diffuse projection screen and away from said position.

13. An apparatus according to claim 12, characterized in that the apparatus (59a) forms a part of an inspection system and the means for holding the object is arranged to be movable to another apparatus (59b) for investigating a non-transparent part of the object.

14. An apparatus according to claim 7, characterized in that the point source (51) is one end (57) of an optical fiber (54) and light from a separate light source is arranged to be guided to another end of the optical fiber.

15. An apparatus according to claim 14, characterized in that the apparatus forms a part of an inspection system and the optical fiber (54) has at least two branches (54a, 54b), where one branch (54a) of the optical fiber is said point source and another branch (54b) of the optical fiber is arranged to provide light to another apparatus of the inspection system.

16. An apparatus according to claim 7, characterized in that it further comprises means (61) for detecting a first area of the image having smaller intensity of light than the intensity of light in a second area of the image.

17. An inspection system (700), comprising at least two apparati for inspecting an object for flaws, characterized in that a first apparatus (59a) for inspection a transparent part of an object for flaws comprises
- a light source (54a), which is substantially a point source,
- a diffuse projection screen (52) for intercepting light emitted from the light source and transmitted through an object under study, and
- electronic image capturing means (53a) arranged to capture an image on the diffuse projection screen.

18. An inspection system according to claim 17, characterized in that a second apparatus is an apparatus (59b) for investigating a non-transparent part of the object.

1. A method (800) for inspecting a certain transparent part of a substantially plate-like object for flaws, which method comprises the steps of:
- illuminating (83) the transparent part to be inspected of the object from one side of the substantially plate-like object with diverging light beam emitted from a light source, which is a point source,
- intercepting (84) light transmitted through the substantially plate-like object with a diffuse projection screen, and
- capturing (85) an image of said transparent part to be inspected by capturing the light intercepted with the diffuse projection screen, characterized in that
- the optical axis of a system formed by the light source and the diffuse projection screen is substantially parallel with a symmetry axis of the substantially plate-like object,
- a considerable part of said transparent part to be inspected is illuminated at a time, and
- while capturing the image of said transparent part to be inspected, the relative orientation of the substantially plate-like object with respect to the light source and to the diffuse projection screen is kept constant.

2. A method according to claim 1, **characterized** in that in the step of illuminating said transparent part to be inspected, the whole transparent part to be inspected is illuminated at a time.

3. A method according to claim 1, **characterized** in that the diffuse projection screen is substantially planar.

4. A method according to claim 3, **characterized** in that the image on the diffuse projection screen, which is translucent, is captured (85) using electronic image capturing means placed on the opposite side of the translucent diffuse projection screen as the object, and in that the normal of the translucent diffuse projection screen is substantially parallel to the direction defined by the light source and the electronic image capturing means.

5. A method according to claim 4, **characterized** in that it further comprises the step of detecting (86) a first area of the image having smaller intensity of light than the intensity of light in a second area of the image.

6. A method according to claim 1, **characterized** in that it further comprises the steps of:
- placing (81) the object under study to a holder having an opening of at least the size of a studied transparent area of the object,
- before capturing the image of said transparent part to be inspected, moving (82) the object under study between the light source and the diffuse projection screen, and
- after capturing the image of said transparent part to be inspected, moving (87) the object under study away from between the light source and the diffuse projection screen.

7. A method according to claim 6, **characterized** in that it further comprises the step of moving (88) the object into another inspection apparatus comprising another light source and another image capturing means for inspecting a non-transparent part of the object.

8. An apparatus (500, 600) for inspecting a transparent part of a substantially plate-like object for flaws, which apparatus comprises
- a light source (51), which is substantially a point source,
- a diffuse projection screen (52) for intercepting light emitted from the light source and transmitted through a substantially plate-like object under study, and
- electronic image capturing means (53) for capturing an image on the diffuse projection screen, **characterized** in that
- the optical axis of a system formed by the light source and the diffuse projection screen is arranged to be substantially parallel with a symmetry axis of the substantially plate-like object,
- a considerable part of the transparent part to be inspected is arranged to be illuminated at a time, and
- while capturing the image of the transparent part to be inspected, the relative orientation of the plate-like object under study with respect to the diffuse screen and to the light source is arranged to be constant.

9. An apparatus according to claim 8, **characterized** in that the whole transparent part to be inspected is arranged to be illuminated at a time.

10. An apparatus according to claim 8, **characterized** in that the diffuse projection screen (52) is substantially planar.

11. An apparatus according to claim 8, **characterized** in that the diffuse projection screen (52) is translucent and the electronic image capturing means (53) is arranged to capture light transmitted through the translucent diffuse projection screen.

12. An apparatus according to claim 11, **characterized** in that the normal of the translucent diffuse projection screen (52) is substantially parallel with the direction defined by the electronic image capturing means (53) and the light source (51).

13. An apparatus according to claim 8, **characterized** in that it further comprises means (58) for holding the object and having an opening at least the size of the studied transparent part of the object.

14. An apparatus according to claim 13, **characterized** in that the means (58) for holding the object is arranged to be movable to a certain position between the light source and the translucent diffuse projection screen and away from said position.

15. An apparatus according to claim 14, **characterized** in that the apparatus (59a) forms a part of an inspection system and the means for holding the object is arranged to be movable to another apparatus (59b) for investigating a non-transparent part of the object.

16. An apparatus according to claim 8, **characterized** in that the point source (51) is one end (57) of an optical fiber (54) and light from a separate light source is arranged to be guided to another end of the optical fiber.

17. An apparatus according to claim 16, **characterized** in that the apparatus forms a part of an inspection system and the optical fiber (54) has at least two branches (54a, 54b), where one branch (54a) of the optical fiber is said point source and another branch (54b) of the optical fiber is arranged to provide light to another apparatus of the inspection system.

18. An apparatus according to claim 8, **characterized** in that it further comprises means (61) for detecting a first area of the image having smaller intensity of light than the intensity of light in a second area of the image.

19. An inspection system (700), comprising at least two apparati for inspecting an object for flaws, where the first apparatus (59a) for inspection a transparent part of an object for flaws comprises
- a light source (54a), which is substantially a point source,
- a diffuse projection screen (52) for intercepting light emitted from the light source and transmitted through a substantially plate-like object under study, and
- electronic image capturing means (53a) for capturing an image on the diffuse projection screen, **characterized** in that
- the optical axis of a system formed by the light source and the diffuse projection screen is substantially parallel with a symmetry axis of the substantially plate-like object,
- a considerable part of the transparent part to be inspected is arranged to be illuminated at a time, and
- while capturing the image of the transparent part to be inspected, the relative orientation of the plate-like object under study with respect to the diffuse screen and to the light source is arranged to be constant.

20. An inspection system according to claim 19, **characterized** in that a second apparatus is an apparatus (59b) for investigating a non-transparent part of the object.
